# EUROPEAN PATENT APPLICATION

(11) **EP 3 644 264 A1**
(43) Date of publication of application: **29.04.2020**
(21) Application number: 18836591.0
(22) Date of filing: 28.08.2018
(51) Int. Cl.: G06Q 30/06, G07F 17/00

(54) **DIAGNOSTIC DEVICE RENTAL METHOD, SERVER, AND STORAGE MEDIUM**

(71) Applicant: Launch Tech Co., Ltd, Longgang District Shenzhen Guangdong 518000 (CN)
(72) Inventor: LIU, Jun, Shenzhen, Guangdong 518000 (CN); XIAO, Rijun, Shenzhen, Guangdong 518000 (CN)
(74) Representative: Krauns, Christian
(86) International application number: PCT/CN2018/102770
(87) International publication number: WO 2020/041981

(57) **Abstract**

Embodiments of the present application disclose a diagnosis equipment rental method, a server and a storage medium. Wherein, this method includes: acquiring a rental request of a user, wherein the rental request includes user account information; presenting the rental information to the user according to the rental request, wherein the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction. It is obvious that, by providing various rental modes for user selection, the user can select one rental mode as needed, there are a variety of rental modes, so that the user experience is improved; in a renting process, there is no need to pay the cash pledge for the diagnosis equipment, the diagnosis equipment can be used as long as the rental fee is paid, so that the use cost of the user is reduced.

## Description

### TECHNICAL FIELD

The present application pertains to the technical field of vehicles, and more particularly to a diagnosis equipment rental method, a server and a storage medium.

### BACKGROUND

With the continuous development of the society, the inventory of vehicles is increasing gradually, and service requirements of vehicle maintenance are increasing as well.

As for vehicle repair and maintenance, it usually needs to perform a vehicle diagnosis at first, however, the vehicle diagnosis is generally realized by a vehicle diagnosis equipment. Currently, when a user needs to use the vehicle diagnosis equipment, he/she may obtain a usage permission of vehicle diagnosis equipment by purchasing or renting the vehicle diagnosis equipment.

The traditional vehicle diagnosis equipment rental mode is usually like this: after pre-paying a cash pledge equivalent to the vehicle diagnosis equipment and signing a rental contract, rent is counted according to usage time, and after a use of the vehicle diagnosis equipment is ended, the cash pledge is returned and the rental fee is paid. However, in the traditional vehicle diagnosis equipment rental mode, a tenant usually needs to prepare the fund equivalent to the vehicle diagnosis equipment to be used as the cash pledge, the cost of early stage pledge is very high, and a fund occupation is high under the condition of long term use. In the case that long term rental equipment occurs, but the long term rental equipment is not frequently used, there is a low utilization rate of the vehicle diagnosis equipment, which results in the waste of equipment resource. In addition, the rental mode of the traditional vehicle diagnosis equipment is very unitary and is poor in user experience. In conclusion, in the traditional vehicle diagnosis equipment rental mode, use cost of the user is high, the rental mode is unitary, the user experience is poor and the utilization rate of the vehicle diagnosis equipment is low.

### SUMMARY

Embodiments of the present application provide a diagnosis equipment rental method, a server and a computer readable storage medium, which aims at solving a problem that the use cost of the user is high, the rental mode is unitary and the user experience is bad under the existing vehicle diagnosis equipment rental mode.

In a first aspect, embodiments of the present application provide a method for renting out diagnosis equipment, comprising: acquiring a rental request of a user, the rental request includes user account information; presenting the rental information to the user according to the rental request, the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction.

In combination with the first aspect, in a first possible implementation mode of the present application, the method further comprises: counting, according to a preset period, a number of usage times of the user using the target diagnosis equipment in the preset period; and adjusting a rental rule of the target rental mode or changing the rental mode according to the number of usage times.

In combination with the first aspect or the first possible implementation mode of the first aspect, in a second possible implementation mode of the present application, the rental mode includes a pay-per-use rental mode, a pay-per-day rental mode, a pay-per-month rental mode, and a pay-per-year rental mode;
said adjusting a rental rule of the target rental mode or changing the rental mode according to the number of usage times particularly comprises: adjusting, when the target rental mode is the pay-per-use rental mode, a rental fee for each usage according to the relationship between the number of usage times and a first preset range of number of usage times; and determining, when the target rental mode is the pay-per-day rental mode or the pay-per-month rental mode or the pay-per-year rental mode, whether the number of usage times is within a corresponding preset range of number of usage times or not; and recommending the user to change the rental mode according to the relationship between the number of usage times and the corresponding preset range of number of usage times, or proactively changing the rental mode, if the number of usage times is not within the corresponding preset range of number of usage times.

In combination with the first aspect or the first possible implementation mode of the first aspect or the second possible implementation mode of the first aspect, in a third possible implementation mode of the present application, after receiving payment confirmation instruction, the method further comprises: calling a pre-stored smart contract from a block chain; performing, according to payment transaction information, an automatic profit allocation by using the smart contract, and recording the payment transaction information and a profit allocation result in the block chain.

In combination with the first aspect or the first possible implementation mode of the first aspect or the second possible implementation mode of the first aspect or the third possible implementation mode of the first aspect, in a fourth possible implementation mode of the present application, before said granting a usage permission of the target diagnosis equipment to the user, the method further comprises: acquiring equipment identification information of the target diagnosis equipment; and establishing and recording a correlationship between the user account information and the equipment identification information.

In combination with the first aspect or the first possible implementation mode of the first aspect or the second possible implementation mode of the first aspect or the third possible implementation mode of the first aspect or the fourth possible implementation mode of the first aspect, in a fifth possible implementation mode of the present application, the presenting the rental information to the user according to the rental request particularly comprises: acquiring corresponding historical use record information according to the user account information; determining preferred rental information according to the historical use record information; and presenting the preferred rental information to the user.

In a second aspect, the present application provides a server, comprising a memory, a processor and computer program stored in the memory and executable by the processor, the processor is configured to execute the computer program to implement: acquiring a rental request of a user, the rental request includes user account information; presenting the rental information to the user according to the rental request, wherein the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction.

In combination with the second aspect, in a first possible implementation mode of the second aspect, the processor is configured to execute the computer program to further implement: counting, according to a preset period, a number of usage times of the user using the target diagnosis equipment in the preset period; and adjusting a rental rule of the target rental mode or changing the rental mode according to the number of usage times.

In combination with the second aspect or a first possible implementation mode of the second aspect, in a second possible implementation mode of the second aspect, the rental mode includes a pay-per-use rental mode, a pay-per-day rental mode, a pay-per-month rental mode, and a pay-per-year rental mode;
the processor is configured to execute the computer program to further implement: adjusting, when the target rental mode is the pay-per-use rental mode, a rental fee for each usage according to the relationship between the number of usage times and a first preset range of number of usage times; determining, when the target rental mode is the pay-per-day rental mode or the pay-per-month rental mode or the pay-per-year rental mode, whether the number of usage times is within a corresponding preset range of number of usage times or not; and recommending the user to change the rental mode according to the relationship between the number of usage times and the corresponding preset range of number of usage times, or alternatively proactively changing the rental mode, if the number of usage times is not within the corresponding preset range of number of usage times.

In combination with the second aspect or the first possible implementation mode of the second aspect or the second possible implementation mode of the second aspect, in a third possible implementation mode of the second aspect, the processor is further configured to execute the computer program to implement: calling a pre-stored smart contract from a block chain; and performing, according to payment transaction information, an automatic profit allocation by using the smart contract, and recording the payment transaction information and a profit allocation result in the block chain.

In combination with the second aspect or the first possible implementation mode of the second aspect or the second possible implementation mode of the second aspect or the third possible implementation mode of the second aspect, in a fourth possible implementation mode of the second aspect, the processor is further configured to execute the computer program to implement: acquiring equipment identification information of the target diagnosis equipment; and establishing and recording a correlationship between the user account information and the equipment identification information.

In combination with the second aspect or the first possible implementation mode of the second aspect or the second possible implementation mode of the second aspect or the third possible implementation mode of the second aspect or the fourth possible implementation mode of the second aspect, in a fifth possible implementation mode of the second aspect, the processor is further configured to execute the computer program to implement: acquiring corresponding historical use record information according to the user account information; determining preferred rental information according to the historical use record information; and presenting the preferred rental information to the user.

In a third aspect, embodiments of the present application provide a computer readable storage medium storing computer program, the computer program is executed by a processor to implement the following steps of: acquiring a rental request of a user, the rental request includes user account information; presenting the rental information to the user according to the rental request, the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction.

In combination with the third aspect, in a first possible implementation mode of the third aspect, the computer program is further executed by the processor to implement the following steps of: counting, according to a preset period, a number of usage times of the user using the target diagnosis equipment in the preset period; and adjusting a rental rule of the target rental mode or changing the rental mode according to the number of usage times.

In combination with the third aspect or the first possible implementation mode of the third aspect, in a second possible implementation mode of the third aspect, the rental mode includes a pay-per-use rental mode, a pay-per-day rental mode, a pay-per-month rental mode, and a pay-per-year rental mode; the computer program is further executed by the processor to implement the following steps of: adjusting, when the target rental mode is the pay-per-use rental mode, a rental fee for each usage according to the relationship between the number of usage times and a first preset range of number of usage times; determining, when the target rental mode is the pay-per-day rental mode or the pay-per-month rental mode or the pay-per-year rental mode, whether the number of usage times is within a corresponding preset range of number of usage times or not; and recommending the user to change the rental mode according to the relationship between the number of usage times and the corresponding preset range of number of usage times, or alternatively proactively changing the rental mode, if the number of usage times is not within the corresponding preset range of number of usage times.

In combination with the third aspect or the first possible implementation mode of the third aspect or the second possible implementation mode of the third aspect, in a third possible implementation mode of the third aspect, the computer program is further executed by the processor to implement the following steps of: calling a pre-stored smart contract from a block chain; and performing, according to payment transaction information, an automatic profit allocation by using the smart contract, and recording the payment transaction information and a profit allocation result in the block chain.

In combination with the third aspect or the first possible implementation mode of the third aspect or the second possible implementation mode of the third aspect or the third possible implementation mode of the third aspect, in a fourth possible implementation mode of the third aspect, the computer program is further executed by the processor to implement the following steps of: acquiring equipment identification information of the target diagnosis equipment; and establishing and recording a correlationship between the user account information and the equipment identification information.

In combination with the third aspect or the first possible implementation mode of the third aspect or the second possible implementation mode of the third aspect or the third possible implementation mode of the third aspect or the fourth possible implementation mode of the third aspect, in a fifth possible implementation mode of the third aspect, the computer program is further executed by the processor to implement the following steps of: acquiring corresponding historical use record information according to the user account information; determining preferred rental information according to the historical use record information; and presenting the preferred rental information to the user.

In the embodiments of the present application, by providing various rental modes for user selection, the user can select one rental mode as needed, there are a variety of rental modes, the user experience is improved; in a renting process, there is no need to pay the cash pledge for the diagnosis equipment, the diagnosis equipment can be used as long as the rental fee is paid, so that the use cost of the user is reduced.

### BRIEF DESCRIPTION OF THE DRAWINGS

In order to explain the embodiments of the present application more clearly, a brief introduction regarding the accompanying drawings that need to be used for describing the embodiments of the present application or the prior art is given below.
FIG. 1 illustrates a schematic view of an application scenario provided by an embodiment of the present application;
FIG. 2 illustrates a schematic flow chart of a diagnosis equipment rental method provided by an embodiment of the present application;
FIG. 3 illustrates another schematic flow chart of a diagnosis equipment rental method provided by an embodiment of the present application;
FIG. 4 illustrates a detailed flow chart of step 307 provided by the embodiment of the present application;
FIG. 5 illustrates a schematic view of interaction of a diagnosis equipment rental method provided by an embodiment of the present application;
FIG. 6 illustrates a detailed flow chart of step 502 provided by the embodiment of the present application; and
FIG. 7 illustrates a schematic block diagram of a vehicle intelligent diagnosis equipment provided by an embodiment of the present application.

### EMBODIMENTS OF THE PRESENT APPLICATION

In the following description, in order to describe but not intended to limit, concrete details such as specific system structure, technique and so on are proposed, such that a comprehensive understanding of the embodiments of the present application is facilitated.

Before introducing the detailed technical solutions of the embodiments of the present application, the application scenarios which may possibly be involved in the embodiments of the present application are introduced and described firstly.

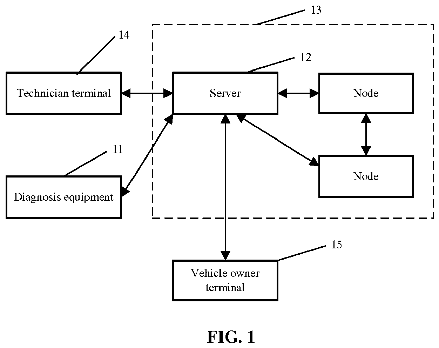

In an application scenario, reference can be made to a schematic view of a scene of a vehicle maintenance plant as shown in FIG. 1, in the scene, a diagnosis equipment 11, a server 12, a block chain 13 including a plurality of nodes, a technician terminal 14 and a vehicle owner terminal 15 can be included.

The diagnosis equipment is provided with an internet of things communication module or other type of communication module, and communicates with the server, the maintenance technician terminal and a user terminal through the communication module. The diagnosis equipment is specifically a vehicle diagnosis equipment which is arranged in the vehicle maintenance plant.

The server can either serve as a single server which accesses the block chain by communicating with a block chain node device, or be registered in the block chain to serve as a node device of the block chain. The server is used for such as access management, equipment management and maintenance management of the vehicle maintenance plant. A technician use a vehicle maintenance technician terminal to perform functions such as to make a reservation to use the maintenance plant, to receive a vehicle repair order, and to make a reservation to take car; however, a vehicle owner can distribute functions such as issuing a vehicle repair order, making an appointment to repair the vehicle and the like through a vehicle owner terminal.

The vehicle owner issues a vehicle repair order through the vehicle owner terminal, the technician receives the vehicle repair order issued by the vehicle owner through the maintenance technician terminal, and makes a reservation to use the vehicle diagnosis equipment in the vehicle maintenance plant according to the requirement of the vehicle repair order. After the reservation is successful, the technician acquires the vehicle of the vehicle owner to be repaired and goes to the vehicle maintenance plant within the reservation time period. After the technician enters the vehicle maintenance plant, he/she registers a login ID through the vehicle diagnosis equipment, and then logins the system using the registered login ID; the vehicle diagnosis equipment sends the user login information to the server, the server binds the user login information with the current equipment serial number, and presents rental information to the user through the diagnosis equipment; after the user has selected the vehicle diagnosis equipment that needs to be rented and the rental mode, the vehicle diagnosis equipment will send information generated by selection operation of the user to the server, the server initiates a payment request according to the diagnosis equipment and the rental mode selected by the user correspondingly; after the user pays the rental payment, a corresponding usage permission of the diagnosis equipment is opened to the user; then, the user can use the vehicle diagnosis equipment to perform vehicle diagnosis; the server may count a number of usage times of the diagnosis equipment, and adjust pricing cost, the rental mode or recommended target change mode according to the number of usage times and the rental mode selected by the user.

It can be understood that, in the aforesaid application scenario, the vehicle owner can also use the vehicle diagnosis equipment in the vehicle maintenance plant to repair his/her vehicle. A block chain node may not be included in the aforesaid system. In addition, the rental information may either be presented to the user through the vehicle diagnosis equipment, or be presented to the user through the user terminal (i.e., vehicle owner terminal).

In other application scenarios, the vehicle diagnosis equipment can be arranged in dense areas such as a community, a parking lot and the like, at the moment, a user who needs vehicle maintenance service may register and login the system, select a rental mode and a diagnosis equipment through the user terminal or the diagnosis equipment, the vehicle diagnosis equipment can be used after the rent is paid. The server may count the number of usage times of the diagnosis equipment, and adjust the pricing cost, the rental mode or the recommended target change mode according to the number of usage times and the rental mode.

It should be noted that, the application scenarios mentioned above is only some exemplary scenes, and shouldn't serve as limitation to the application scenarios of the embodiment of the present application.

After the application scenarios which may be involved in the embodiments of the present application are introduced, the technical solutions provided by the embodiment of the present application are described in detail below. In order to illustrate the technical solutions disclosed by the present application, the technical solutions are described by particular embodiments below:

### Embodiment one

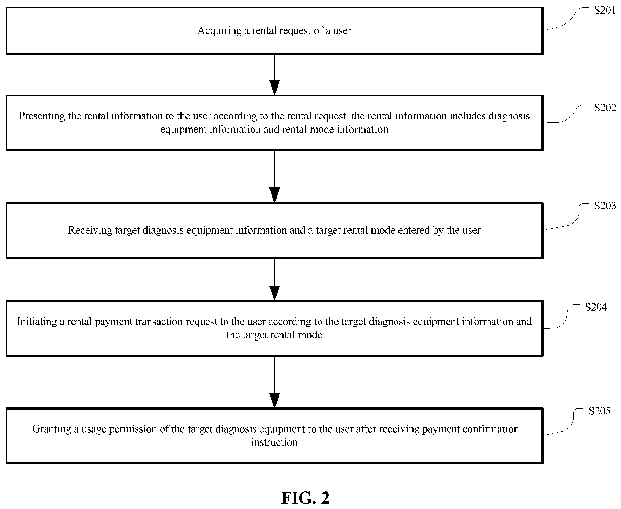

Please refer to FIG. 2, FIG. 2 illustrates a schematic flowchart of a diagnosis equipment rental method according to embodiment one of the present application, this method can comprise following steps:
step 201, acquiring a rental request of a user, wherein the rental request includes user account information.

It should be noted that, the renting request is initiated by the user through a user terminal, for example, a vehicle owner initiates a rental request through a vehicle owner terminal, a maintenance technician initiates a rental request through the technician terminal, or the rental request is initiated by the user through a diagnosis equipment interface; particularly, after the user starts the diagnosis equipment, the rental request is initiated by performing a corresponding human-computer interaction operation on the diagnosis equipment interface. The user account information can include but is not limited to a user account login name and a login password.

The aforesaid user refers to an individual with a maintenance requirement, the user can be a vehicle owner, can be the vehicle maintenance technician, and can also be a maintenance plant, or be a user who has some other requirements.

Step 202, presenting the rental information to a user according to the rental request, the rental information includes diagnosis equipment information and rental mode information.

It should be noted that, presenting the rental information to the user can particularly be presenting the rental information by the user terminal, and can also be presenting the rental information by the diagnosis equipment. The rental information may include the diagnosis equipment information and the rental mode information, the diagnosis equipment information may include but is not limited to a name of the diagnosis equipment, a type of the diagnosis equipment, a serial number of the diagnosis equipment, and a state of the diagnosis equipment (e.g., whether the diagnosis equipment is rented), an application range of the diagnosis equipment, and the like; the rental mode information can include but is not limited to a name of the rental mode, a charging rule of the rental mode, an optimal rental mode and the like; where, the optimal rental mode can be the one most suitable for the user and determined by the server according to use records of the user account. Of course, if the user account is a new user, there is no use record in the user account, then, the rental mode information presented to the new user doesn't include relevant information including the optimal rental mode.

Particularly, the diagnosis equipment or the user terminal displays the rental mode information, diagnosis equipment information and the like on a display screen, the user can select the rental mode and the diagnosis equipment which most meet the requirements of the user according to actual requirements; the diagnosis equipment generates corresponding instructions according to the operations of the user and sends the instructions to the server.

Step 203, receiving target diagnosis equipment information and target rental mode entered by the user.

Step 204, initiating a rental payment transaction request to the user according to the target diagnosis equipment information and the target rental mode.

It should be noted that, the rental mode can include but is not limited to a pay-per-use rental mode, a pay-per-day rental mode, a pay-per-month rental mode, a pay-per-year rental mode, and a quarterly rental mode. The user needs to pay the rent by number of usage times in the pay-per-use rental mode, to pay the rent by the day in the pay-per-day rental mode, to pay the rent by the month in the pay-per-month rental mode, to pay the rent by the year in the pay-per-year rental mode, and to pay the rent quarterly in the quarterly rental mode. The user can select a required target rental mode from the variety of rental modes.

In general, a rental mode with a relatively long time such as the pay-per-year rental mode, the quarterly rental mode and the pay-per-month rental mode has an average single renting cost lower than that of the pay-per-day rental mode. The user can select a target rental mode according to the number of usage times himself/herself. If the user has less number of usage times per day, he/she can select the pay-per-use rental mode or the pay-per-day rental mode, if user has more number of usage times per day, he/she can select the rental modes such as the pay-per-month rental mode, the pay-per-year rental mode, and the like. A plurality of rental modes are provided for user selection, use cost of the user can be reduced to a certain extent; meanwhile, the variety of rental modes can meet the personalized demand of the user, and user experience is improved.

Different target rental modes and different target diagnosis equipment correspond to different rents, the server initiate the rental payment transaction request including the information of the amount to be paid according to the target rental mode and the target diagnosis equipment selected by the user, based on the preset rental modes and the rental fees corresponding to the various diagnosis equipments.

Step 205, granting the usage permission of the target diagnosis equipment to the user after receiving the payment confirmation instruction.

Particularly, after the user pays the rent, the server receives the payment confirmation instruction of the user, grants corresponding usage permission to the user according to the target rental mode and the target diagnosis equipment selected by the user; then, the user can use the target diagnosis equipment.

It can be seen that, in the embodiment, by providing various rental modes for user selection, the user can select one rental mode as needed, there are a variety of rental modes, and the user experience is improved; in a renting process, there is no need to pay the cash pledge for the diagnosis equipment, the diagnosis equipment can be used as long as the rental fee is paid, the use cost of the user is reduced, which facilitates the user to rent the diagnosis equipment.

### Embodiment two

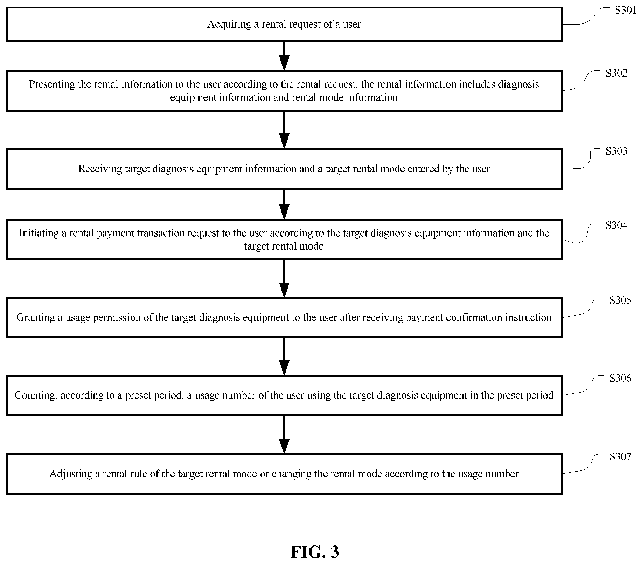

Please refer to FIG. 3, FIG. 3 illustrates another schematic flowchart of the diagnosis equipment rental method provided by the embodiment of the present application.

Step 301, acquiring a rental request of a user, the rental request includes user account information.

Step 302, presenting the rental information to the user according to the rental request, the rental information includes diagnosis equipment information and rental mode information.

Step 303, receiving target diagnosis equipment information and target rental mode entered by the user.

Step 304, initiating a rental payment transaction request to the user according to the target diagnosis equipment information and the target rental mode.

Step 305, granting the usage permission of the target diagnosis equipment to the user after receiving the payment confirmation instruction.

It should be noted that the aforesaid steps 301-305 are the same as the steps 201-205 in the foregoing embodiment one, regarding relevant descriptions, reference can be made to the embodiment one, it is not repeatedly described herein.

Step 306, counting, according to a preset period, the number of usage times of the user using the target diagnosis equipment in the preset period.

It should be noted that, the aforesaid preset period is different according to different target rental modes, that is, the preset period would be correspondingly changed with different rental modes. For example, the preset period of pay-per-use rental mode, pay-per-day rental mode and pay-per-month rental mode is one day, the preset period of pay-per-year rental mode is one month.

Step 307: adjusting a rental rule of the target rental mode or changing the rental mode according to the number of usage times.

Particularly, the rental rule of the target rental mode is adjusted accordingly, or the rental mode is changed according to the counted number of usage times and the target rental mode selected by the user. That is, the rental rule may be adjusted or the rental mode may be changed according to the number of usage times and the target rental mode. Which operation should be particularly performed is completely determined by the number of usage times and the target rental mode selected by the user, different target rental modes and different number of usage times correspond to different operations.

Wherein, the rental rule refer to pricing fee for each usage, and adjusting the rental rule is about adjusting the rental fee of the target rental mode, which can be, in particular, adjusting the rental fee for each usage, and also can be adjusting rental fee of certain rental mode.

In general condition, pricing is adjusted from the benefit of the user, and an adjustment of pricing is for reducing the use cost of the user. For example, in the case of pay-per-use rental mode, pricing in sections according to the number of usage times is set in advance, the more the number of usage times, the lower the rental fee for each usage; when the number of usage times of the user reaches a certain pricing level, the rental fee for each usage is adjusted as the pricing corresponding to the pricing level; in this way, when the number of usage times of the user is increased, the rental fee for each usage will be reduced, and the use cost of the user can be correspondingly reduced.

The change of the rental mode refers to forcibly changing the current rental mode of the user into another rental mode, for example, changing the pay-per-use rental mode into the pay-per-month rental mode. The basis of the change is the number of usage times of the user per day and the target rental mode; for example, when the user use many times every day, but the target rental mode selected by the user is pay-per-use rental mode, the use cost of the user is obviously relatively higher due to the pay-per-use rental mode, the pay-per-use rental mode can be forcibly changed into the rental mode such as the pay-per-day rental mode, the pay-per-month rental mode or the quarterly rental mode; when the user has less number of usage times, and the rental mode selected by the user is pay-per-month rental mode or pay-per-year rental mode, the pay-per-month rental mode or the pay-per-year rental mode can be forcibly changed into the pay-per-use rental mode. In this way, the rental mode is actively changed into the mode most appropriate to the use condition of the user, and the use cost of the user can be reduced.

Generally, the change sequence is adjusted step by step when the rental mode is changed, and adjusting step by step refers to changing the current level rental mode into a previous level rental mode or a next level rental mode. The rental mode may include but is not limited to pay-per-use rental mode, pay-per-day rental mode, pay-per-month rental mode, renting quarterly and pay-per-year rental mode. For example, after the number of usage times per day exceeds a preset threshold, the pay-per-day rental mode is upgraded upwards to be pay-per-month rental mode, when the number of usage times in one month exceeds a value, the pay-per-month rental mode is upgraded upwards to be the pay-per-year rental mode; in the same way, when the number of usage times in one month is lower than a preset threshold, the pay-per-year rental mode is degraded to be the pay-per-month rental mode, when the number of usage times per day is lower than a preset threshold, the pay-per-month rental mode is degraded to be the pay-per-day rental mode; when there are fewer number of usage times in one day, the pay-per-day rental mode is degraded to be the pay-per-use rental mode.

According to the relationship between the number of usage times and the target rental mode, except that the rental rule can be adjusted and the rental mode can be changed, a change of the rental mode can also be recommended to the user. The recommendation of change of rental mode may refer to recommending a change of the rental mode to the user, and the basis of the recommendation is the number of usage times of the user per day and the target rental mode, when the cost performance of the rental mode selected by the user and the number of usage times of the user per day is relatively lower, a rental mode that conforms to the number of usage times of the user per day can be recommended to the user. For example, the current rental mode is pay-per-use rental mode, but the number of usage times of the user per day exceeds a preset frequency threshold, the rental mode such as the pay-per-day rental mode, the pay-per-month rental mode, the pay-per-year rental mode can be recommended to the user. In this way, the use cost of the user can be reduced.

In this embodiment, a plurality of rental modes are provided for user selection, the user can select one rental mode as needed, there are a variety of rental modes, the user experience is improved; in a renting process, there is no need to pay for the cash pledge for the diagnosis equipment, the diagnosis equipment can be used as long as the rental fee is paid, use cost of the user is reduced, which facilitates the user to rent the diagnosis equipment. In addition, the number of usage times of the diagnosis equipment is counted, and the rental rule is adjusted or the rental mode is changed correspondingly according to the number of usage times and the target rental mode, the utilization rate of the diagnosis equipment is improved, and the use cost of the user is reduced.

### Embodiment three

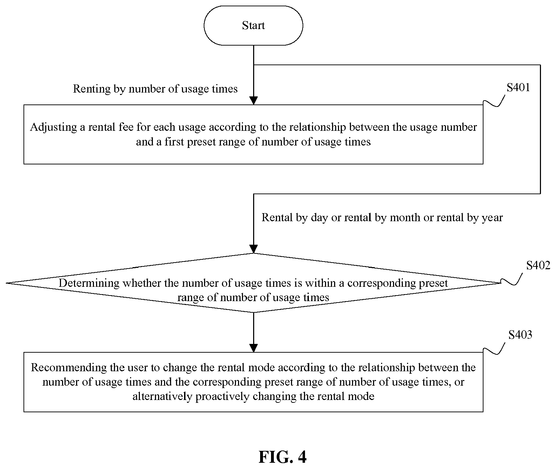

In some cases, a rental mode may include a pay-per-use rental mode, a pay-per-day rental mode, a pay-per-month rental mode and a pay-per-year rental mode, a server may perform a corresponding adjustment operation according to different rental modes and different number of usage times. The process of performing corresponding operations according to the number of usage times of the user under the rental mode such as the pay-per-use rental mode, the pay-per-day rental mode, the pay-per-month rental mode, the pay-per-year rental mode and the like is introduced and described as follows:
In some embodiments of the present application, the rental mode may include the pay-per-use rental mode, the pay-per-day rental mode, the pay-per-month rental mode, the pay-per-year rental mode; based on the embodiment two, referring to specific schematic flowchart of step 307 as shown in FIG. 4, the step 307, that is the process of adjusting the rental rule of the target rental mode or changing the rental mode according to the number of usage times can particularly comprise:
Step 401, adjusting the rental fee for each usage according to the relationship between the number of usage times and the first preset number of usage times range when the target rental mode is the pay-per-use rental mode.

Particularly, a segmented pricing range corresponding to number of usage times is set in advance, then, the rental fee for each usage is adjusted according to the number of usage times of current user.

For example, the minimum number of usage times per day is set to be N, N is a positive integer, when the number of usage times is less than or equal to the minimum number of usage times N, the rental fee for each usage is 10 RMB; when the number of usage times is larger than the minimum number of usage times N and is less than 2N, the rental fee for each usage is 5 RMB; when the number of usage times is larger than or equal to 2N, and the rental fee for each usage is 4 RMB. In this way, which pricing level the current number of usage times of the user falls within is determined according to the counted number of usage times per day, then, the rental fee for each usage is correspondingly adjusted to be the pricing corresponding to the pricing level.

It should be noted that, the segmented pricing range and dividing standard can be set according to actual needs, which is not limited herein.

It is to be understood that, when the number of usage times of the user is increased, but the user's rental mode is still pay-per-use rental mode, in this case, even though the rental fee for each usage is reduced, a dramatic increase of the use cost of the user will be caused inevitably. At this time, if the number of usage times of the user has exceeded the preset threshold of number of usage times, for example, the preset threshold of number of usage times is 5N, the user can be recommended to change the pay-per-use rental mode into the pay-per-day rental mode or pay-per-month rental mode. Alternatively, when the number of usage times per day exceeds a preset threshold of number of usage times, the rental mode is proactively changed into a rental mode which conforms to the number of usage times of the user better; for example, the pay-per-use rental mode can be proactively changed into the pay-per-day rental mode.

Step 402, when the target rental mode is the pay-per-day rental mode, or the pay-per-month rental mode or the pay-per-year rental mode, determining whether the number of usage times falls within a corresponding preset number of usage times range or not; entering step 403 if the number of usage times doesn't fall within the corresponding preset number of usage times range.

Step 403, recommending the user to change the rental mode according to the relationship between the number of usage times and the corresponding preset range of number of usage times, or alternatively proactively changing the rental mode.

It should be noted that, if the target rental mode is the pay-per-day rental mode, then, the corresponding preset range of number of usage times is the second preset range of number of usage times, if the number of usage times is lower than a lower limit value of the second range of preset number of usage times, it is recommended to change the pay-per-day rental mode into the pay-per-use rental mode, or the pay-per-day rental mode is proactively changed into the pay-per-use rental mode; if the number of usage times is higher than an upper limit value of the second preset range of number of usage times, it is recommended to change the pay-per-day rental mode into the pay-per-month rental mode or the pay-per-day rental mode is proactively changed into the pay-per-month rental mode; if the target rental mode is the pay-per-month rental mode, the corresponding preset range of number of usage times is the third preset range of number of usage times, if the number of usage times is lower than the lower limit value of the third preset range of number of usage times, it is recommended to change the pay-per-month rental mode into the pay-per-day rental mode or the pay-per-month rental mode is proactively changed into the pay-per-day rental mode; if the number of usage times is higher than the upper limit value of the third preset range of number of usage times, it is recommended to change the pay-per-month rental mode into the pay-per-year rental mode or the pay-per-month rental mode is proactively changed into the pay-per-year rental mode; if the target rental mode is the pay-per-year rental mode, the corresponding preset range of number of usage times is the fourth range of preset number of usage times, if the number of usage times is lower than the lower limit value of the fourth preset range of number of usage times, it is recommended to change the pay-per-year rental mode into the pay-per-month rental mode or the pay-per-year rental mode is proactively changed into the pay-per-month rental mode.

The first preset range of number of usage times, the second preset range of number of usage times, the third preset range of number of usage times and the fourth preset range of number of usage times can be set manually according to actual requirements.

In this embodiment, under different rental modes, the rental fee for each usage is adjusted or the corresponding rental mode is recommended to the user or the rental mode is proactively changed according to the number of usage times of the user, such that the rental mode and the rental fee for each usage are consistent with the number of usage times of the user, the use cost of the user is reduced to the maximum extent, and the utilization rate of the diagnosis equipment is improved.

### Embodiment four

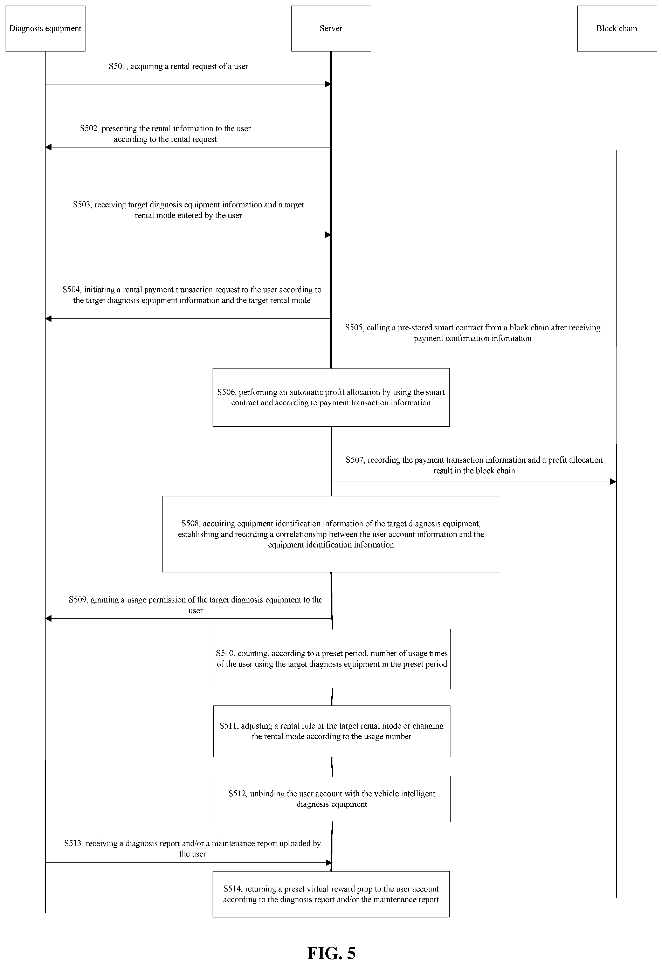

According to the embodiment, an interactive process between a diagnosis equipment, a server and a block chain is introduced, wherein, the user particularly initiates a rental request through the diagnostic equipment, the server presents the rental information to the user through the diagnostic equipment. Please refer to FIG. 5, FIG. 5 illustrates an interactive schematic view of a diagnosis equipment rental method according to the embodiment of the present application, this method can comprise following steps:
Step 501, acquiring a rental request of a user via the server, the rental request includes user account information.

Step 502, presenting the rental information to the user via the server according to the rental request, the rental information includes diagnosis equipment information and rental mode information.

It can be understood that, when the user is a new user, the user account of the user does not have historical use records, the preset commonly applicable rental information can be directly presented to the user. When the user is an old user, the user account of the user has historical use records of the user, the historical use records include historical rental information and historical number of usage times information of the user, and the like, in this case, in order to improve user experience, the rental information which conforms to the usage habit and the rental habit of the user is recommended to the user according to the historical use of the user account.

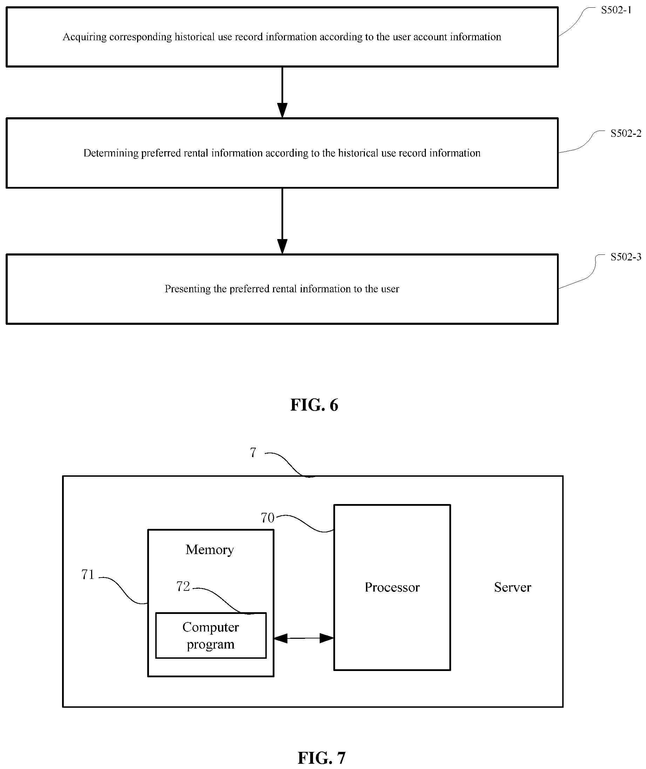

Therefore, in some embodiments of the present application, please refer to the detailed schematic flowchart of step 502 as shown in FIG. 6, the method can particularly comprise:
Step 502-1, acquiring corresponding historical use record information according to the user account information.

Step 502-2, determining preferred rental information according to the historical use record information.

Step 505-3, presenting the preferred rental information to the user.

It can be understood that, the aforesaid preferred rental information may include but is not limited to a preferred diagnosis equipment and a preferred rental mode, the preferred rental information can be selected based on the type of the user's historical use diagnosis equipment and the corresponding number of usage times, and the usage mode.

The aforesaid preferred rental information can be presented to the user through an interface of the diagnosis equipment; of course, the preferred rental information can also be presented to the user through a user terminal, which is not limited herein. The rental information conforming to the usage habit of the user is recommended to the user according to the historical use record information of the user, so that the user experience is further improved.

For example, when a use record information table of the user indicates that the user has fewer number of usage times every day, pay-per-use rental mode can be recommended to the user; when the use record information table of the user indicates that the user has more number of usage times every day, pay-per-month rental mode or pay-per-year rental mode can be recommended to the user.

Of course, in other embodiments, even though the preferred rental information may not be recommended to the old user, the purpose of the present application can also be achieved.

Step 503, receiving the target diagnosis equipment information and the target rental mode entered by the user via the server.

Particularly, in the embodiment, a user can input corresponding target diagnosis equipment information and target rental mode through the diagnosis equipment. Of course, in other embodiments, the user can also implement the step 503 through the user terminal.

Step 504, initiating a rental payment transaction request to the user via the server according to the target diagnosis equipment information and the target rental mode.

Step 505, calling pre-stored smart contract from the block chain via the server after the payment confirmation instruction is received.

Step 506, performing an automatic profit distribution via the server using the smart contract and according to the payment transaction information.

Step 507, recording the payment transaction information and a profit distribution result in the block chain via the server.

It should be noted that, the smart contract can be generated by an equipment investment party, the equipment maintenance party and the platform institution service party which come to an agreement for such as an income sharing rule of the vehicle intelligent diagnosis equipment in advance, and then upload the income sharing rule to the block chain to generate the smart contract. According to the transaction sharing rule of the smart contract, automatic profit sharing can be performed for the current payment transaction information, and the aforesaid transaction sharing rule can include share proportions of rental fees possessed by such as the equipment investment party, the equipment maintenance party and the platform institution service party respecti vel y.

The server can call the smart contract from the block chain, performs profit distribution automatically for current rental income, and calculate sharing of rental income of the equipment investment party, the equipment maintenance party and the platform institution service party. The payment transaction information and the profit distribution result are stored in the block chain, such that the reliability of the transaction information can be ensured, and data reliability can be ensured.

Of course, an automatic profit distribution may not be performed herein, the purpose of the embodiment of the present application can also be realized by applying a traditional manual profit distribution. However, the automatic profit distribution can improve the efficiency of profit distribution. It is obvious that, the efficiency of profit distribution and the reliability of profit distribution are improved by calling the smart contract to perform profit distribution on the payment transaction information automatically.

Step 508, acquiring equipment identification information of the target diagnosis equipment, and establishing and recording a correlationship between the user account information and the equipment identification information via the server.

It should be noted that, the equipment identification information can be specifically an equipment serial number, and the equipment serial number is a unique identification number which is set previously for each equipment.

Particularly, the user account can be bound with the serial number of the target diagnosis equipment after payment confirmation instruction of a user is received, and the correlationship between the user account number and the equipment serial number is recorded.

It can be seen that, by associating the user information with the equipment after the user has paid the rent, a turnover efficiency of the equipment is improved.

It can be understood that, the server can perform automatic profit distribution and can also perform binding on equipment identification after the user has paid the rent. In other words, the execution sequence between steps 508 to 510 and the execution sequence between steps 511 to 512 can be parallel, and can also be sequential, and the sequence is arbitrary.

In step 509, granting, via the server, a usage permission of the target diagnosis equipment to the user.

Step 510, counting the number of usage times of the user using the target diagnosis equipment in a preset period via the server according to the preset period.

Step 511, adjusting the rental rule of the target rental mode or changing the rental mode according to the number of usage times via the server.

Step 512, unbinding the user account with the target diagnosis equipment if the rental deadline expires.

Step 513, receiving a diagnosis report and/or a maintenance report uploaded by the user.

Step 514, returning a preset virtual reward prop to the user account according to the diagnosis report and/or the maintenance report.

It should be noted that, the aforesaid virtual reward prop can be embodied as accumulated reward points, a virtual coin or other virtual reward props. Rewards such as corresponding accumulated reward points, virtual coins and the like are returned to the user account according to the report uploaded by the user, the user can use these rewards to purchase value-added service or rent equipment.

In this embodiment, a plurality of rental modes are provided for user selection, the user can select one rental mode as needed, there are a variety of rental modes, the user experience is improved; in a renting process, there is no need to pay for the cash pledge for the diagnosis equipment, the diagnosis equipment can be used as long as the rental fee is paid, use cost of the user is reduced, which facilitates the user to rent the diagnosis equipment. In addition, the number of usage times of the diagnosis equipment is counted, and the rental rule is adjusted or the rental mode is changed correspondingly according to the number of usage times and the target rental mode, the utilization rate of the diagnosis equipment is improved, and the use cost of the user is reduced.

It should be understood that, value of serial number of the steps in the aforesaid embodiment doesn't mean a sequencing of execution sequences of the steps, the execution sequence of each of the steps should be determined by functionalities and internal logics of the steps themselves, and shouldn't be regarded as limitation to an implementation process of the embodiment of the present application.

### Embodiment five

FIG. 7 illustrates a schematic view of a server provided by an embodiment of the present application. As shown in FIG. 7, the server 7 in this embodiment includes: a processor 70, a memory 71 and computer program 72 stored in the memory 71 and executable by the processor 70, such as the diagnosis equipment renting program. When the computer program 72 is executed by the processor 70, the processor 70 is configured to implement the steps in the various diagnosis equipment rental method embodiments.

Particularly, the processor is configured to execute the computer program to implement the following steps of: acquiring a rental request of a user, the rental request includes user account information; presenting the rental information to the user according to the rental request, the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction.

It can be seen that, by providing a plurality of rental modes for user selection, the user can select one rental mode as needed, there are a variety of rental modes, the user experience is improved; in a renting process, there is no need to pay for the cash pledge for the diagnosis equipment, the diagnosis equipment can be used as long as the rental fee is paid, so that use cost of the user is reduced.

In a first applicable implementation mode, the processor 70 is further configured to execute the computer program 72 to implement the following steps of: counting, according to a preset period, a number of usage times of the user using the target diagnosis equipment in the preset period; and adjusting a rental rule of the target rental mode or changing the rental mode according to the number of usage times.

By counting the number of usage times and adjusting the rental rule or changing the rental mode correspondingly according to the number of usage times and the rental mode, a utilization rate of the diagnosis equipment is improved, the use cost of the user is reduced, too.

In a second applicable implementation mode, the rental mode includes pay-per-use rental mode, pay-per-day rental mode, pay-per-month rental mode, and pay-per-year rental mode;

The processor 70 is configured to execute the computer program 72 to particularly implement the following steps of: adjusting a rental fee for each usage according to the relationship between the number of usage times and a first preset range of number of usage times when the target rental mode is the pay-per-use rental mode; determining, when the target rental mode is the pay-per-day rental mode or the pay-per-month rental mode or the pay-per-year rental mode, whether the number of usage times is within a corresponding preset number of usage times range or not; and if the number of usage times is not within the corresponding preset number of usage times range, recommending the user to change the rental mode according to the relationship between the number of usage times and the corresponding preset range of number of usage times or alternatively proactively changing the rental mode.

In a third applicable implementation mode, the processor 70 is further configured to execute the computer program 72 to implement the following steps of: calling a pre-stored smart contract from a block chain; and performing an automatic profit allocation by using the smart contract and according to the payment transaction information, and recording the payment transaction information and a profit allocation result in the block chain. By calling the smart contract to perform automatic profit distribution for the payment transaction information, both profit distribution efficiency and reliability of profit distribution are improved.

In a fourth applicable implementation mode, the processor 70 is further configured to execute the computer program 72 to implement the following steps of: acquiring equipment identification information of the target diagnosis equipment; and establishing and recording a correlationship between the user account information and the equipment identification information. By associating the user information with the equipment after the user pays the rent, a turnover efficiency of the equipment is improved.

In a fifth applicable implementation mode, the processor 70 is further configured to execute the computer program 72 to implement the following steps of: acquiring corresponding historical use record information according to the user account information; determining preferred rental information according to the historical use record information; and presenting the preferred rental information to the user. By recommending the rental information conforming to usage habit of the user according to the use record information of the user, the user experience is further improved.

As an example, the computer program 72 can be stored in the memory 71 and is executed by the processor 70 to accomplish the present application. The computer program 72 is a series of computer program instruction segments that can accomplish specific functions, the instruction segments are used for describing an execution process of the computer program 72 in the server 7.

The server can include but is not limited to the processor 70 and the memory 71. It can be understood for the ordinarily skilled one in the art that, FIG. 7 is only an example of the server 7 and shouldn't be regarded as constituting limitation to the server 7, elements more or less than the elements shown in the figures can be included, as an alternative, these elements or different elements are combined, for example, the server can also include an input-output device, a network access facility, a bus, etc.

The so called processor 80 can be CPU (Central Processing Unit), and can also be other general purpose processor, DSP (Digital Signal Processor), ASIC (Application Specific Integrated Circuit), FGPA (Field-Programmable Gate Array), or some other programmable logic devices, discrete gate or transistor logic device, discrete hardware component, etc. The general purpose processor can be a microprocessor, or alternatively, the processor can also be any conventional processor and so on.

The storage device 71 can be an internal storage unit of the server 7, such as a hard disk or a memory of the server 7. The storage device 71 can also be an external storage device of the server 7, such as a plug-in hard disk, a SMC (Smart Media Card), a SD (Secure Digital) card, a FC (Flash Card) equipped on the server 7. Further, the storage device 71 may include both the internal storage unit and the external storage device of the server 7. The storage device 71 is configured to store the computer program, and other procedures and data needed by the server 7. The storage device 71 can also be configured to store data that has been output or being ready to be output temporarily.

The computer program can be stored in a computer readable storage medium. Based on this understanding, a whole or part of flow process of implementing the method in the aforesaid embodiments of the present application can also be accomplished by using computer program to instruct relevant hardware. When the computer program is executed by the processor, the steps in the various method embodiments described above can be implemented.

Particularly, the computer readable storage medium stores computer program, the processor executes the computer program to implements the following steps of: acquiring a rental request of a user, the rental request includes user account information; presenting the rental information to the user according to the rental request, the rental information includes diagnosis equipment information and rental mode information; receiving target diagnosis equipment information and a target rental mode entered by the user; initiating a rental payment transaction request to the user according to the target diagnosis equipment information and the target rental mode; and granting a usage permission of the target diagnosis equipment to the user after receiving payment confirmation instruction.

It can be seen that, by providing a plurality of rental modes for user selection, the user can select one rental mode as needed, there are a variety of rental modes, the user experience is improved; in a renting process, there is no need to pay for the cash pledge for the diagnosis equipment, the diagnosis equipment can be used as long as the rental fee is paid, use cost of the user is reduced.

In a first applicable implementation mode, the processor is further configured to execute the computer program to implement following steps of: counting, according to a preset period, a number of usage times of the user using the target diagnosis equipment in the preset period; and adjusting a rental rule of the target rental mode or changing the rental mode according to the number of usage times. By counting the number of usage times and adjusting the rental rule or changing the rental mode correspondingly according to the number of usage times and the rental mode, a utilization rate of the diagnosis equipment is improved, and use cost of the user is reduced.

In a second applicable implementation mode, the rental mode includes pay-per-use rental mode, pay-per-day rental mode, pay-per-month rental mode, and pay-per-year rental mode;
the processor is configured to execute the computer program to particularly implement following steps of:: adjusting a rental fee for each usage according to the relationship between the number of usage times and a first preset number of usage times range when the target rental mode is the pay-per-use rental mode; determining, when the target rental mode is the pay-per-day rental mode or the pay-per-month rental mode or the pay-per-year rental mode, whether the number of usage times is within a corresponding preset number of usage times range or not; and if the number of usage times is not within the corresponding preset range of number of usage times, recommending the user to change the rental mode according to the relationship between the number of usage times and the corresponding preset range of number of usage times or alternatively proactively changing the rental mode.

In a third applicable implementation mode, the processor is further configured to execute the computer program to implement following steps of: calling a pre-stored smart contract from a block chain; and performing an automatic profit allocation by using the smart contract and according to the payment transaction information, and recording the payment transaction information and a profit allocation result in the block chain. By calling the smart contract to perform automatic profit distribution for the payment transaction information, both profit distribution efficiency and reliability of profit distribution are improved.

In a fourth applicable implementation mode, the processor is further configured to execute the computer program to implement following steps of: acquiring equipment identification information of the target diagnosis equipment; and establishing and recording a correlationship between the user account information and the equipment identification information. By associating the user information with the equipment after the user pays the rent, a turnover efficiency of the equipment is improved.

In a fifth applicable implementation mode, the processor is further configured to execute the computer program to implement following steps of: acquiring corresponding historical use record information according to the user account information; determining preferred rental information according to the historical use record information; and presenting the preferred rental information to the user. By recommending the rental information conforming to usage habit of the user according to the use record information of the user, such that the user experience can be further improved.

The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc.

Wherein, the computer program includes computer program codes, which can be in the form of source code, object code, executable documents or some intermediate form, etc.

It needs to be explained that, the contents contained in the computer readable medium can be added or reduced appropriately according to the requirement of legislation and patent practice in a judicial district, for example, in some judicial districts, according to legislation and patent practice, the computer readable medium doesn't include electrical carrier signal and telecommunication signal.

As stated above, the aforesaid embodiments are only intended to explain but not to limit the technical solutions of the present application. Although the present application has been explained in detail with reference to the above-described embodiments, it should be understood for the ordinary skilled one in the art that, the technical solutions described in each of the above-described embodiments can still be amended, or some technical features in the technical solutions can be replaced equivalently; these amendments or equivalent replacements, which won't make the essence of corresponding technical solution to break away from the spirit and the scope of the technical solution in various embodiments of the present application, should all be included in the protection scope of the present application.

## Claims

1. A method for renting out a diagnosis equipment, **characterized in that**, the method comprises:
acquiring a rental request of a user, wherein the rental request includes user account information;
presenting rental information to the user according to the rental request, wherein the rental information includes diagnosis equipment information and rental mode information;
receiving target diagnosis equipment information and target rental mode entered by the user;
initiating a rental payment transaction request to the user according to the target diagnosis equipment information and the target rental mode; and
granting a usage permission of the target diagnosis equipment to the user after receiving a payment confirmation instruction.

2. The method according to claim 1, **characterized in that**, the method further comprises:
counting, according to a preset period, number of usage times of the user using the target diagnosis equipment in the preset period; and
adjusting a rental rule of the target rental mode or changing the rental mode according to the number of usage times.

3. The method according to claim 2, **characterized in that**, the rental mode includes a pay-per-use rental mode, a pay-per-day rental mode, a pay-per-month rental mode, and a pay-per-year rental mode;
the step of adjusting a rental rule of the target rental mode or changing the rental mode according to the number of usage times comprises:
adjusting, when the target rental mode is the pay-per-use rental mode, a rental fee for each usage according to a relationship between the number of usage times and a first preset range of number of usage times; and
determining, when the target rental mode is the pay-per-day rental mode or the pay-per-month rental mode or the pay-per-year rental mode, whether the number of usage times is within a corresponding preset range of number of usage times or not; and recommending the user to change rental mode according to the relationship between the number of usage times and the corresponding preset range of number of usage times, or alternatively proactively changing the rental mode, if the number of usage times is not within the corresponding preset range of number of usage times.

4. The method according to any one of claims 1 to 3, **characterized in that**, after receiving payment confirmation instruction, the method further comprises:
calling a pre-stored smart contract from a block chain;
performing, according to payment transaction information, an automatic profit allocation by using the smart contract, and recording the payment transaction information and a profit allocation result in the block chain.

5. The method according to claim 4, **characterized in that**, before granting a usage permission of the target diagnosis equipment to the user, the method further comprises:
acquiring equipment identification information of the target diagnosis equipment; and
establishing and recording a correlationship between the user account information and the equipment identification information.

6. The method according to claim 1, **characterized in that**, the step of presenting the rental information to the user according to the rental request particularly comprises:
acquiring corresponding historical use record information according to the user account information;
determining preferred rental information according to the historical use record information; and
presenting the preferred rental information to the user.

7. A server, comprising a memory, a processor and computer program stored in the memory and executed by the processor, **characterized in that**, the processor is configured to execute the computer program to implement:
acquiring a rental request of a user, wherein the rental request includes user account information;
presenting rental information to the user according to the rental request, wherein the rental information includes diagnosis equipment information and rental mode information;
receiving target diagnosis equipment information and a target rental mode entered by the user;
initiating a rental payment transaction request to the user according to the target diagnosis equipment information and the target rental mode; and
granting a usage permission of the target diagnosis equipment to the user after receiving payment confirmation instruction.

8. The server according to claim 7, **characterized in that**, the processor is further configured to execute the computer program to implement:
counting, according to a preset period, number of usage times of the user using the target diagnosis equipment in the preset period; and
adjusting a rental rule of the target rental mode or changing the rental mode according to the number of usage times.

9. The server according to claim 8, **characterized in that**, the rental mode includes a pay-per-use rental mode, a pay-per-day rental mode, a pay-per-month rental mode, and a pay-per-year rental mode;
the processor is further configured to execute the computer program to implement:
adjusting, when the target rental mode is the pay-per-use rental mode, a rental fee for each usage according to a relationship between the number of usage times and a first preset range of number of usage times;
determining, when the target rental mode is the pay-per-day rental mode or the pay-per-month rental mode or the pay-per-year rental mode, whether the number of usage times is within a corresponding preset range of number of usage times or not; and recommending the user to change the rental mode according to the relationship between the number of usage times and the corresponding preset range of number of usage times, or alternatively proactively changing the rental mode, if the number of usage times is not within the corresponding preset range of number of usage times.

10. The server according to any one of claims 7 to 9, **characterized in that**, the processor is further configured to execute the computer program to implement:
calling a pre-stored smart contract from a block chain; and
performing, according to payment transaction information, an automatic profit allocation by using the smart contract, and recording the payment transaction information and a profit allocation result in the block chain.

11. The server according to claim 10, **characterized in that**, the processor is further configured to execute the computer program to implement:
acquiring equipment identification information of the target diagnosis equipment; and
establishing and recording a correlationship between the user account information and the equipment identification information.

12. The server according to claim 7, **characterized in that**, the processor is further configured to execute the computer program to implement:
acquiring corresponding historical use record information according to the user account information;
determining preferred rental information according to the historical use record information; and
presenting the preferred rental information to the user.

13. A computer readable storage medium storing computer program, **characterized in that**, the computer program is executed by a processor to implement the following steps of:
acquiring a rental request of a user, wherein the rental request includes user account information;
presenting the rental information to the user according to the rental request, wherein the rental information includes diagnosis equipment information and rental mode information;
receiving target diagnosis equipment information and a target rental mode entered by the user;
initiating a rental payment transaction request to the user according to the target diagnosis equipment information and the target rental mode; and
granting a usage permission of the target diagnosis equipment to the user after receiving payment confirmation instruction.

14. The computer readable storage medium according to claim 13, **characterized in that**, the computer program is further executed by the processor to implement the following steps of:
counting, according to a preset period, a number of usage times of the user using the target diagnosis equipment in the preset period; and
adjusting a rental rule of the target rental mode or changing the rental mode according to the number of usage times.

15. The computer readable storage medium according to claim 14, **characterized in that**, the rental mode includes a pay-per-use rental mode, a pay-per-day rental mode, a pay-per-month rental mode, and a pay-per-year rental mode; the computer program is further executed by the processor to implement the following steps of:
adjusting, when the target rental mode is the pay-per-use rental mode, a rental fee for each usage according to a relationship between the number of usage times and a first preset range of number of usage times;
determining, when the target rental mode is the pay-per-day rental mode or the pay-per-month rental mode or the pay-per-year rental mode, whether the number of usage times is within a corresponding preset range of number of usage times or not; and recommending the user to change the rental mode according to the relationship between the number of usage times and the corresponding preset range of number of usage times or alternatively proactively changing the rental mode, if the number of usage times is not within the corresponding preset range of number of usage times.

16. The computer readable storage medium according to any one of claims 13-15, **characterized in that**, the computer program is further executed by the processor to implement the following steps of:
calling a pre-stored smart contract from a block chain; and
performing, according to payment transaction information, an automatic profit allocation by using the smart contract, and recording the payment transaction information and a profit allocation result in the block chain.

17. The computer readable storage medium according to claim 16, **characterized in that**, the computer program is further executed by the processor to implement the following steps of:
acquiring equipment identification information of the target diagnosis equipment; and
establishing and recording a correlationship between the user account information and the equipment identification information.

18. The computer readable storage medium according to claim 13, **characterized in that**, the computer program is further executed by the processor to implement the following steps of:
acquiring corresponding historical use record information according to the user account information;
determining preferred rental information according to the historical use record information; and
presenting the preferred rental information to the user.
